# EUROPÄISCHE PATENTSCHRIFT

(11) **EP 0 869 308 B1**
(45) Veröffentlichungstag und Bekanntmachung des Hinweises auf die Patenterteilung: **20.11.2002**
(21) Anmeldenummer: 98104616.2
(22) Anmeldetag: 13.03.1998
(51) Int. Cl.: F16L 55/165

(54) **Vorrichtung zum Einziehen eines Rohrs in eine Erdbohrung**
Device for pulling a pipe into a borehole
Dispositif de tirage d'un tuyau dans un puit

(30) Priorität: 02.04.1997 DE 19713640
(43) Veröffentlichungstag der Anmeldung: 07.10.1998
(73) Patentinhaber: TERRA AG fuer Tiefbautechnik, CH-4802 Strengelbach (CH)
(72) Erfinder: Jenne, Dietmar, Dipl.-Wi.-Ing., 4802 Strengelbach (CH)
(74) Vertreter: Schaumburg, Thoenes & Thurn

(56) Entgegenhaltungen:
- EP-A- 0 053 480
- DE-C- 19 527 138

## Beschreibung

Die Erfindung betrifft eine Vorrichtung zum Einziehen eines Rohrs in eine Erdbohrung, insbesondere zum Ersetzen einer im Erdboden verlegten aufbrechbaren Versorgungsleitung, umfassend einen mindestens annähernd konischen Verdrängungskopf, der an seinem durchmessergrößeren hinteren Ende mit einem zylindrischen rohrförmigen Schaft verbunden ist, dessen Außendurchmesser dem größeren Durchmesser des Verdrängungskopfes entspricht und dessen Innendurchmesser größer als der Außendurchmesser des einzuziehenden Rohres ist, wobei Mittel vorgesehen sind, um das einzuziehende Rohr mit dem Schaft zu verbinden.

Eine solche Vorrichtung ist beispielsweise aus der DE 195 27 138 C1 bekannt. Bei der dort beschriebenen Vorrichtung ist der Verdrängungskopf an seinem vorderen Ende mit einem Splittkeil verbunden, der zum Spalten oder Zertrümmern einer im Boden verlegten alten und zu ersetzenden Versorgungsleitung dient. Ein solcher Splittkeil ist besonders dann erforderlich, wenn das zu ersetzende Rohr ein Gußrohr ist. Diese Gußrohr haben alle vier bis sechs Meter eine sehr dickwandige Muffe, die zertrümmert werden muß.

Bestehen die zu ersetzenden Rohre aus Beton oder Steinzeug, ist ein solcher Splittkeil nicht unbedingt erforderlich.

Der Verdrängungskopf, dessen vorderer Durchmesser kleiner als der Innendurchmesser des zu ersetzenden Rohres ist und dessen hinterer Durchmesser größer als der Außendurchmesser des neuen einzuziehenden Rohres ist, dient dazu, die Trümmer des zu ersetzenden Rohres radial nach außen in das Erdreich zu drücken und die Erdbohrung so zu erweitern, daß das neue Rohr eingezogen werden kann.

Das einzuziehende Rohr wird mit seinem vorderen Ende in den zylindrischen Schaft eingeführt und bei der bekannten Lösung mit Hilfe von Bolzen gesichert, die durch Gewindebohrungen in den hinteren Teil des zylindrischen Schaftes geschraubt sind und in radiale Bohrungen eingreifen, welche das einzuziehende Rohr durchsetzen.

Nachteilig an dieser Lösung ist, daß der zylindrische Schaft außen nicht glatt ist. Um zu verhindern, daß die Köpfe der eingeschraubten Bolzen abgerissen werden, müssen noch Abweiselemente an der Außenumfangsfläche des zylindrischen Schaftes angeschweißt werden. Damit entstehen an diesen Stellen erhebliche Kräfte, wenn die Vorrichtung durch den Boden getrieben wird. Im Extremfall kann der Verdrängungskopf von dem zylindrischen Schaft abreißen.

Es ist ferner bekannt, das neue Rohr mit Hilfe eines Seiles und einer Seilklemmvorrichtung einzuziehen, die am hinteren Ende des einzuziehenden Rohres befestigt und mit dem Seil verbunden wird. Diese Lösung hat den Nachteil, daß sich die Seile bei Zugbelastung stark dehnen. Bei einem einzuziehenden Rohr von 100 m Länge kann dies dazu führen, daß sich das Zugseil um ca. 1 m längt. Damit kann das einzuziehende Rohr aus dem zylindrischen Schaft der Vorrichtung herausrutschen und sich in der Erdbohrung verklemmen.

Der Erfindung liegt die Aufgabe zugrunde, eine Vorrichtung der eingangs genannten Art anzugeben, bei der das einzuziehende Rohr auf einfache Weise mit dem zylindrischen Schaft der Vorrichtung verbunden werden kann, wobei die Außenumfangsfläche des zylindrischen Schaftes völlig glatt bleibt.

Diese Aufgabe wird erfindungsgemäß durch die im kennzeichnenden Teil des Anspruchs 1 angegebenen Merkmale gelöst.

Bei der erfindungsgemäßen Lösung bleibt der zylindrische Schaft an seiner Außenseite völlig glatt. Die Laschen können genügend dick gemacht werden, um den Verbindungsbolzen einen genügenden Halt zu gewährleisten. Darüber hinaus können die Laschen aus einem hochfesten Material hergestellt werden, das sicherstellt, daß die Verbindungsbolzen nicht ausreißen können. Dies ist eine wesentlich preiswertere Lösung, als wenn der gesamte zylindrische Schaft dickwandiger oder aus einem höherwertigen Material hergestellt werden müßte.

Die Verwendung von Laschen zur Befestigung des einzuziehenden Rohres an der Vorrichtung bietet darüber hinaus die Möglichkeit, die Verbindungsbolzen nach dem Einsetzen in die Bolzenaufnahmebohrungen jeweils durch ein quer zur Bolzenachse gerichtetes Bolzensicherungselement zu sichern. Dies wiederum bietet die Möglichkeit, Steckbolzen zu verwenden, die schnell und einfach zu montieren und auch wieder zu lösen sind. Grundsätzlich wäre es natürlich auch möglich, die Verbindungsbolzen in Gewindebohrungen einzuschrauben. Es hat sich aber gezeigt, daß sich die Gewindebolzen durch die zum Teil erhebliche Querbelastung in ihrem Gewinde verklemmen und nach dem Einziehen des Rohres schlecht zu lösen sind.

Die Sicherung des Verbindungsbolzens kann in der Weise erfolgen, daß in jeder Lasche eine die Bolzenaufnahmebohrung schneidende zweite Bohrung zum Einstecken eines Bolzensicherungselementes vorgesehen ist und daß der Verbindungsbolzen an seiner Außenumfangsfläche eine Aussparung hat, die nach dem Einsetzen des Verbindungsbolzens in die Bolzenaufnahmebohrung mit der zweiten Bohrung fluchtet.

Vorzugsweise ist die Aussparung dabei von einer umlaufenden Ringnut gebildet, so daß der Verbindungsbolzen in einer beliebigen Stellung in die Bolzenaufnahmebohrung eingesetzt werden kann. Vorzugsweise ist das Bolzensicherungselement ein Schwerspannstift, der in die zweite Bohrung eingeschlagen und mit einem Durchschlag auch wieder herausgeschlagen werden kann.

Die erfindungsgemäße Vorrichtung kann an sich auf jede geeignete Weise durch die Erdbohrung bewegt werden. Vorzugsweise ist aber der Verdrängungskopf hohl mit einer konischen Anlagefläche für den Kopf einer druckmittelbetätigten Rammvorrichtung ausgebildet, so daß die erfindungsgemäße Vorrichtung einschließlich des einzuziehenden Rohres mittels der Rammvorrichtung durch die Erdbohrung bewegt wird, wobei gegebenenfalls auch noch das zu ersetzende Rohr zertrümmert wird.

Bei einer bevorzugten Ausführungsform der Erfindung hat der Verdrängungskopf an seinem vorderen Ende eine axiale Öffnung. Diese Öffnung kann für zwei Funktionen genutzt werden. Zum einen bietet sie die Möglichkeit, nach der Ankunft der erfindungsgemäßen Vorrichtung am Zielort die Rammvorrichtung, die sich in der konischen Anlagefläche verklemmt hat, durch die axiale Öffnung hindurch vom Verdrängungskopf zu trennen, so daß der Verdrängungskopf und der Schaft leichter von dem einzuziehenden Rohr gelöst und aus dem Zielschacht herausgehoben werden können. Zum anderen kann in die axiale Öffnung ein Adapter zur Befestigung eines Splittkeils eingesetzt werden, wobei zweckmäßigerweise in dem Verdrängungskopf eine quer zu der axialen Öffnung gerichtete dritte Bohrung zur Aufnahme eines Sicherungsbolzens ausgebildet ist, mit dem der in die axiale Öffnung eingesetzte Splittkeiladapter an dem Verdrängungskopf festlegbar ist. Der Sicherungsbolzen seinerseits kann wiederum in der gleichen Weise, wie dies oben für den Verbindungsbolzen beschrieben wurde, mit einem Schwerspannstift gegen ein unbeabsichtigtes Lösen gesichert werden.

Weitere Merkmale und Vorteile der Erfindung ergeben sich aus der folgenden Beschreibung, welche in Verbindung mit den beigefügten Figuren die Erfindung anhand von Ausführungsbeispielen verdeutlicht. Es zeigen:
- Figur 1: einen die Achse enthaltenden schematischen Schnitt durch eine erfindungsgemäße Vorrichtung zum Ersetzen einer im Erdboden verlegten aufbrechbaren Versorgungsleitung,
- Figur 2: eine der Figur 1 entsprechende Darstellung einer Vorrichtung gemäß einer zweiten Ausführungsform,
- Figur 3: eine der Figur 1 entsprechende Darstellung einer Vorrichtung zum Einziehen eines Rohrs in eine Erdbohrung gemäß einer dritten Ausführungsform der Erfindung,
- Figur 4: einen die Achse enthaltenden Schnitt durch den Verbindungsbereich von zylindrischem Schaft und einzuziehendem Rohr in vergrößertem Maßstab, und
- Figur 5: einen schematischen Schnitt durch den Endbereich der Vorrichtung und eines einzuziehenden Rohres zur Erläuterung des Einziehverfahrens.

Die erfindungsgemäße Vorrichtung zum Ersetzen einer im Erdboden verlegten aufbrechbaren Versorgungsleitung 10 durch eine neue Leitung 12 umfaßt eine allgemein mit 14 bezeichnete Splitthülse. Die Splitthülse besteht aus einem zumindest annähernd konischen Verdrängungskopf 16 und einem zylindrischen Schaft 18, der sich an das rückwärtige durchmessergrößere Ende des Verdrängungskopfes 16 anschließt. An seinem vorderen Ende hat der Verdrängungskopf 16 eine axiale Bohrung 20, in welche ein Splittkeiladapter 22 eingesetzt ist. Der Splittkeiladapter 22 wird in der Bohrung 20 mittels eines Sicherungsbolzens 24 gehalten, der eine senkrecht zur Achse 26 der Splitthülse 14 gerichtete Bohrung 28 im Verdrängungskopf 16 und eine mit dieser fluchtende Bohrung 30 im Splittkeiladapter 22 durchsetzt. Der Sicherungsbolzen 24 wird in seiner Lage durch einen Schwerspannstift 32 gehalten, der eine senkrecht zur Achse 26 der Splitthülse 14 und senkrecht zur Achse 34 der Bohrung 28 gerichtete Bohrung in dem Verdrängungskopf 16 durchsetzt und in eine in die Umfangsfläche des Sicherungsbolzens 24 eingeschnittene Ringnut 36 eingreift.

An seinem vorderen Ende hat der Splittkeiladapter 22 einen nicht dargestellten Schlitz, in den ein flacher Splittkeil 38 eingesetzt ist. Der Splittkeil wird in dem Splittkeiladapter 22 mit Hilfe eines Bolzens 40 gehalten, der seinerseits in der oben beschriebenen Weise wiederum durch einen Schwerspannstift 42 gesichert ist.

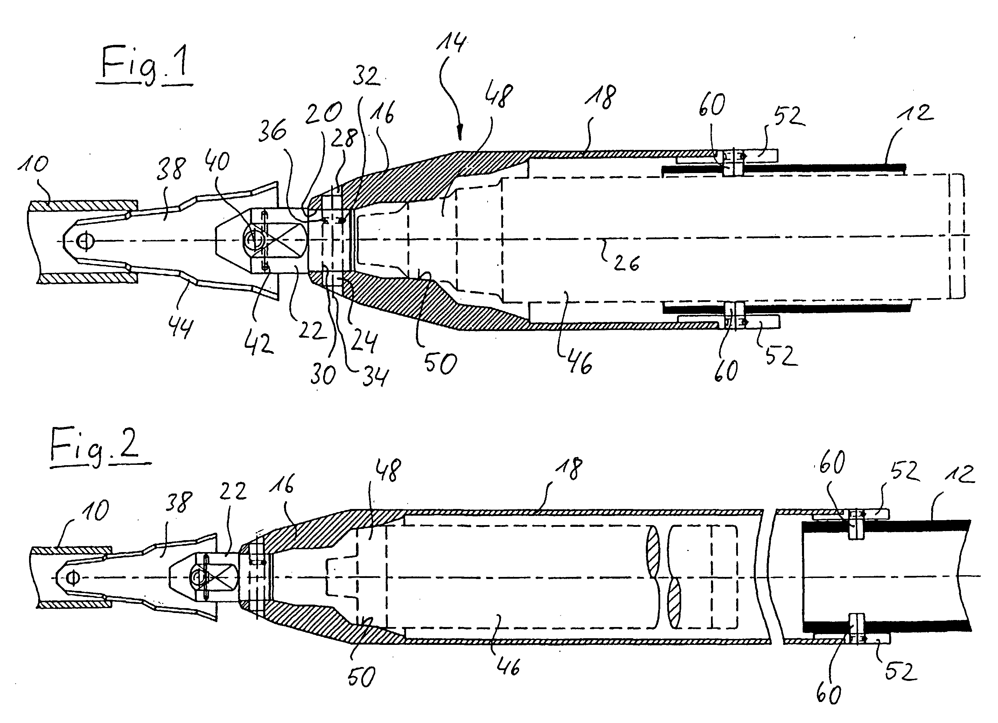

Der Splittkeil 38 hat zwei nach vorne hin aufeinander zu laufende Brechkanten 44 und ist an seinem vorderen Ende schmaler als der Durchmesser des aufzubrechenden alten Rohres 10, während er an seinem rückwärtigen Ende deutlich breiter als der Durchmesser des Rohres 10 ist, wie dies die Figur 1 zeigt.

Innerhalb der Splitthülse 14 ist eine mit einem Druckfluid angetriebene Rammvorrichtung 46 angeordnet, die mit ihrem Kopfteil 48 an einer konischen Anlagefläche 50 innerhalb des Verdrängungskopfes 16 anliegt. Im Betrieb klemmt die Rammvorrichtung 46 fest in dem Verdrängungskopf 16, so daß die Schlagenergie der Rammvorrichtung 46 direkt auf den Verdrängungskopf 16 und den Splittkeil 38 übertragen wird.

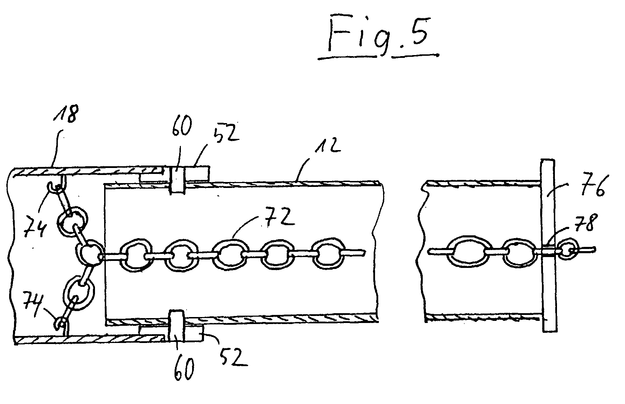

Die Verbindung zwischen dem einzuziehenden neuen Rohr 12 und der Splitthülse 14 soll nun im folgenden anhand der Figur 4 näher erläutert werden.

An dem rückwärtigen Rand des zylindrischen Schaftes 18 der Splitthülse 14 sind an zwei einander diametral gegenüberliegenden Stellen Laschen 52 angeschweißt, so daß die radial äußere Fläche 54 der jeweiligen Lasche 52 mit der Mantelfläche 56 des zylindrischen Schaftes 18 fluchtet. Die Laschen 52 erstrecken sich im wesentlichen parallel zur Achse 26 der Splitthülse 14.

Die Laschen 52 haben jeweils eine glatte radiale Bohrung 58, in die ein kopfloser Steckbolzen 60 soweit eingesteckt ist, daß sein radial äußeres Ende mit der Fläche 54 der Lasche 52 fluchtet. Die Länge des Steckbolzens 60 ist so gewählt, daß er aus der Bohrung 58 der Lasche 52 radial nach innen ragt und die Wand des einzuziehenden Rohres 12 radial durchsetzt, wie dies die Figuren zeigen. Zur Sicherung des Steck- oder Verbindungsbolzens 60 dient ein Schwerspannstift 62, der eine senkrecht zur Achse 64 des Steckbolzens 60 und zur Achse 26 der Splitthülse 14 gerichtete Bohrung 66 in der Lasche 52 durchsetzt, wobei er gleichzeitig in eine am Umfang des Steckbolzens 60 ausgebildete Ringnut mit halbkreisförmigem Querschnitt eingreift, wie dies Figur 4 zeigt. Die Bohrung 66 schneidet also die Bohrung 58 in der Lasche 52 so, daß die Wand der Bohrung 58 durch die Achse der Bohrung 66 verläuft.

Der Steckbolzen 60 kann noch an seinem nach radial außen weisenden Ende eine gestrichelt angedeutete Innengewindebohrung 70 haben, in die eine übliche Schraube eingeschraubt werden kann. Dies erleichtert die Handhabung des Steckbolzens 60 bei der Montage und Demontage. Diese Schraube wird selbstverständlich für den eigentlichen Betrieb der Splitthülse wieder herausgeschraubt.

Der Steckbolzen 60 hat üblicherweise einen Durchmesser von ca. 30 bis 60 mm je nach Durchmesser und Gewicht des einzuziehenden Rohres. Vorzugsweise bestehen die Steck- oder Verbindungsbolzen aus hochlegiertem Stahl, der allerdings nicht gehärtet wird. Dies verhindert plötzliche ungewollte Scherbrüche.

Auf der Baustelle wird die soweit beschriebene Vorrichtung folgendermaßen montiert: Das Rammbohrgerät 46 wird in die Splitthülse 14 geschoben. Die kraft- und energieschlüssige Verbindung zwischen dem Rammgerät 46 und der Splitthülse 14 erfolgt über die Konusflächen 48, 50. Das neue einzuziehende Rohr 12 wird von hinten in die Splitthülse 14 geschoben. Anschließend werden mit einem Bohrer Löcher mit dem Durchmesser der Verbindungsbolzen 60 durch die Querbohrungen 58 der Laschen 52 in das neue einzuziehende Rohr gebohrt. Bei diesen neuen Rohren handelt es sich in der Regel um Kunststoffrohre, die typischerweise aus Polyethylen bestehen. Diese Rohre sind leicht und auch von Hand bohrbar. Anschließend werden die Steckbolzen 60 montiert und durch die Schwerspannstifte 62 gesichert. Diese Montage ist innerhalb weniger Minuten auch bei größeren Rohrdurchmessern durchführbar.

Selbstverständlich können mehr als zwei Laschen 52 vorgesehen sein, die dann vorzugsweise mit gleichen Winkelabständen voneinander über den Umfang des zylindrischen Schaftes 18 verteilt werden.

Zusätzlich zu der vorstehend beschriebenen Verbindung zwischen dem einzuziehenden Rohr 12 und der Splitthülse 14 kann das einzuziehende Rohr an der Splitthülse 14 noch mit einer Kette 72 befestigt werden (Fig. 5), die an inneren Befestigungspunkten 74 der Splitthülse 14 befestigt wird und innerhalb des Rohres 12 bis an dessen hinteres Ende verläuft. Dort wird diese Kette 72 in eine Spannplatte 76 eingehängt, deren Außendurchmesser größer als der Durchmesser des einzuziehenden Rohres 12 ist. Diese Spannplatte 76 hat einen Schlitz 78, der etwas breiter als die Stärke eines Kettengliedes ist. Dies ermöglicht eine einfache Verbindung zwischen Kette 72 und Spannplatte 76, indem die Kette 72 seitlich von Hand in den Schlitz 78 eingeführt wird. Das folgende, um 90° verdrehte Kettenglied verhindert, daß die Kette 72 durch den Schlitz 78 rutschen kann. Der Vorteil einer Zugkette gegenüber den bisher üblicherweise verwendeten Zugseilen liegt darin, daß sich die Kette kaum dehnt.

Wie aus der Figur 1 ersichtlich ist, wird der Kopf der Rammvorrichtung 46 in der Konusfläche 50 nach dem Einzugsvorgang festklemmen. Zur Demontage der Splitthülse 14 wird zunächst der Splittkeiladapter 22 aus der Bohrung 20 herausgenommen. Durch die nun freiliegende Öffnung kann die Rammvorrichtung 46 nach hinten aus der Konusfläche 50 herausgeschlagen werden. Dies erleichtert die Demontage der erfindungsgemäßen Vorrichtung unter den räumlich häufig sehr beengten Verhältnissen in dem Zielschacht erheblich.

Die Ausführungsform gemäß Figur 2 unterscheidet sich von der Ausführungsform gemäß Figur 1 im wesentlichen lediglich durch die Länge des zylindrischen Schaftes. Diese Lösung wird man bei kleineren Durchmessern wählen. Wie Figur 2 zeigt, verbleibt bei der dort dargestellten Lösung zwischen der Außenfläche der Rammvorrichtung 46 und der Innenfläche des zylindrischen Schaftes 18 kein Platz, um das einzuziehende Rohr noch dazwischenzuschieben. In diesem Fall muß also der zylindrische Schaft nach hinten über die Rammvorrichtung 46 hinausragen, um das einzuziehende Rohr zu befestigen. Im übrigen sind sämtliche mit der Ausführungsform gemäß Figur 1 übereinstimmenden Teile mit denselben Bezugszeichen versehen.

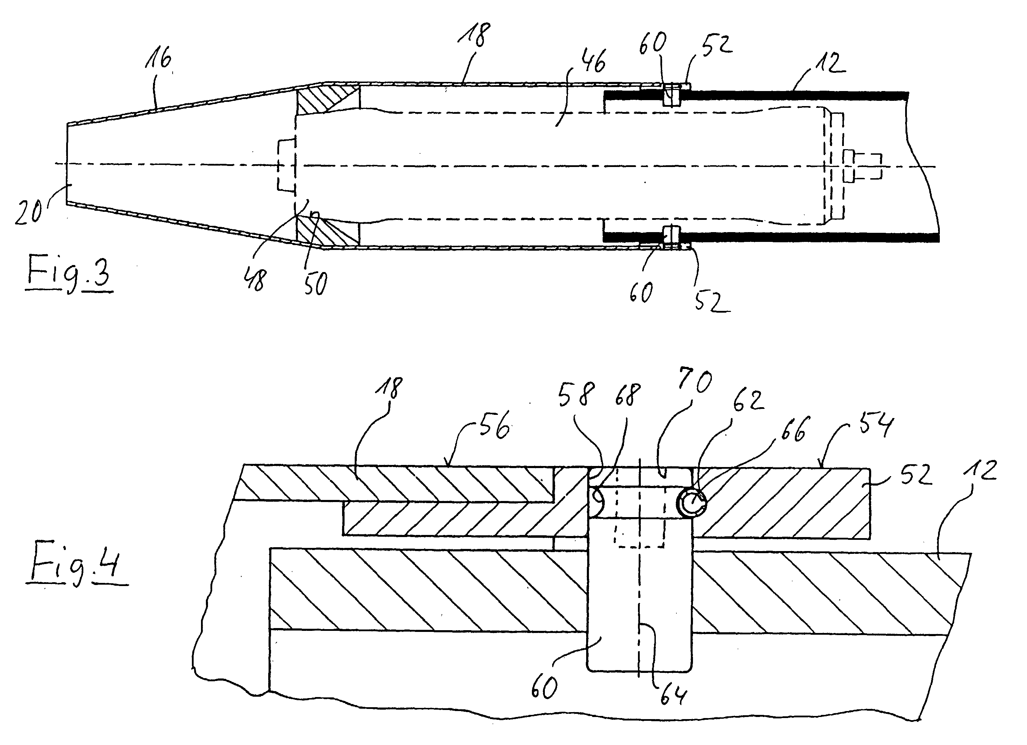

Die Ausführungsform gemäß Figur 3 dagegen ist insbesondere für größere Durchmesser bestimmt und dient in erster Linie für Fälle, in denen die alte Leitung vorher nicht zertrümmert werden muß. Auch hier sind wieder gleiche Teile mit gleichen Bezugszeichen versehen. Wie man erkennt, ist der Verdrängungskopf an seinem vorderen durchmesserkleineren Ende offen, so daß durch diese Öffnung hindurch die Rammvorrichtung 46 leicht von der Splitthülse 14 getrennt werden kann. Die Verbindung zwischen dem einzuziehenden Rohr 12 und der Splitthülse 14 erfolgt in derselben Weise, wie dies anhand der Figur 4 beschrieben wurde.

## Patentansprüche

1. Vorrichtung zum Einziehen eines Rohres (12) in eine Erdbohrung, insbesondere zum Ersetzen einer im Erdboden verlegten aufbrechbaren Versorgungsleitung (10), umfassend einen mindestens annähernd konischen Verdrängungskopf (16), der an seinem durchmessergrößeren hinteren Ende mit einem zylindrischen rohrförmigen Schaft (18) verbunden ist, dessen Außendurchmesser dem großen Durchmesser des Verdrängungskopfes (16) entspricht und dessen Innendurchmesser größer als der Außendurchmesser des einzuziehenden Rohres (12) ist, wobei Mittel vorgesehen sind, um das einzuziehende Rohr (12) mit dem Schaft (18) zu verbinden, **dadurch gekennzeichnet, daß** an dem dem Verdrängungskopf (16) fernen Ende des Schaftes (18) mindestens zwei achsparallel gerichtete Laschen (52) mit einem Winkelabstand voneinander so befestigt sind, daß die radial äußere Fläche (54) der jeweiligen Lasche (52) mit der äußeren Mantelfläche des Schaftes (18) fluchtet, und daß die Laschen (52) jeweils eine radiale Bohrung zur Aufnahme eines kopflosen Verbindungsbolzens (60) haben, derart, daß der Verbindungsbolzen (60) im eingesetzten Zustand nicht über die radial äußere Fläche (54) der Lasche (52) hinausragt.

2. Vorrichtung nach Anspruch 1, **dadurch gekennzeichnet, daß** der Verbindungsbolzen (60) nach dem Einsetzen in die Bolzenaufnahmebohrung (58) durch ein quer zur Bolzenachse (64) gerichtetes Bolzensicherungselement (62) gesichert ist.

3. Vorrichtung nach Anspruch 2, **dadurch gekennzeichnet, daß** in jeder Lasche (52) eine die Bolzenaufnahmebohrung (58) schneidende zweite Bohrung (66) zum Einstecken eines Bolzensicherungselementes (62) vorgesehen ist und daß der Verbindungsbolzen (60) an seiner Außenumfangsfläche eine Aussparung (68) hat, die nach dem Einsetzen des Verbindungsbolzens (60) in die Bolzenaufnahmebohrung (58) mit der zweiten Bohrung (66) fluchtet.

4. Vorrichtung nach Anspruch 3, **dadurch gekennzeichnet, daß** die Aussparung eine umlaufende Ringnut (68) ist.

5. Vorrichtung nach einem der Ansprüche 2 bis 4, **dadurch gekennzeichnet, daß** das Bolzensicherungselement ein Schwerspannstift (62) ist.

6. Vorrichtung nach einem der Ansprüche 1 bis 5, **dadurch gekennzeichnet, daß** der Verdrängungskopf (16) hohl mit einer konischen Anlagefläche (50) für den Kopf (48) einer druckmittelbetätigten Rammvorrichtung (46) ausgebildet ist.

7. Vorrichtung nach einem der Ansprüche 1 bis 6, **dadurch gekennzeichnet, daß** der Verdrängungskopf (16) an seinem durchmesserkleineren vorderen Ende eine axiale Öffnung (20) hat.

8. Vorrichtung nach Anspruch 7, **dadurch gekennzeichnet, daß** in dem Verdrängungskopf (16) eine quer zu der axialen Öffnung (20) gerichtete dritte Bohrung (28) zur Aufnahme eines Sicherungsbolzens (24) ausgebildet ist, mit dem ein in die axiale Öffnung (20) eingesetzter Splittkeiladapter (22) an Verdrängungskopf (16) festlegbar ist.

9. Vorrichtung nach einem der Ansprüche 1 bis 8, **gekennzeichnet durch** in dem Verdrängungskopf (16) oder dem Schaft (18) angeordnete Mittel (74) zum Befestigen einer Zugkette (72) und **durch** eine Spannplatte (76), deren Durchmesser größer als der Durchmesser des einzuziehenden Rohres (12) ist und die einen zum Plattenrand hin offenen Schlitz (78) hat, dessen Breite geringfügig größer als die Stärke eines Gliedes der Zugkette (72) ist.

## Claims

1. Apparatus for pulling a pipe (12) into an earth bore, in particular for replacing a breakable supply conduit (10) laid in the earth, comprising an at least approximately conical displacement head (16), which, at its larger diametered rear end, is connected to a cylindrical tubular shaft (18), the outer diameter of which shaft corresponds to the large diameter of the displacement head (16) and the inner diameter of which is larger than the outer diameter of the pipe (12) to be pulled in, means being provided for connecting the pipe (12) to be pulled in to the shaft (18), **characterized in that** at the end of the shaft (18) remote from the displacement head (16) at least two brackets (52) arranged parallel to the axis and having an angular spacing to one another are fixed such that the radially outer surface (54) of each bracket (52) is flush with the outer lateral surface of the shaft (18) and **in that** each of the brackets (52) has a radial bore for receiving a headless connecting bolt (60) such that the connecting bolt (60), in the inserted condition, does not project beyond the radially outer surface (54) of the bracket (52).

2. Apparatus according to claim 1, **characterized in that** the connecting bolt (60), after its insertion into the bolt receiving bore (58), is secured by a bolt securing element (62) oriented perpendicularly to the bolt axis (64).

3. Apparatus according to claim 2, **characterized in that** in each bracket (52) a second bore (66) intersecting the bolt receiving bore (58) is provided for the insertion of a bolt securing element (62), and **in that** the connecting bolt (60) has a recess (68) on its outer circumferential surface, which recess, after the insertion of the connecting bolt (60) into the bolt receiving bore (58), is aligned with the second bore (66).

4. Apparatus according to claim 3, **characterized in that** the recess is a circumferential ring groove (68).

5. Apparatus according to one of the claims 2 to 4, **characterized in that** the bolt securing element is a heavy type dowel pin (62).

6. Apparatus according to one of the claims 1 to 5, **characterized in that** the displacement head (16) is hollow and has a conical abutment surface (50) for engagement with the head (48) of a pressure fluid-actuated ram apparatus (46).

7. Apparatus according to one of the claims 1 to 6, **characterized in that** the displacement head (16) has an axial opening (20) at its smaller diametered forward end.

8. Apparatus according to claim 7, **characterized in that** a third bore (28) is formed in the displacement head (16) perpendicularly to the axial opening (20) for receiving a securing bolt (24) which serves to fix a splitting wedge adapter (22) inserted into the axial opening (20) to the displacement head (16).

9. Apparatus according to one of the claims 1 to 8, **characterized by** means (74) arranged in the displacement head (16) or in the shaft (18) for fastening a pulling chain (72), and by a gripping plate (76), the diameter of which is larger than the diameter of the pipe (12) to be pulled in and which has a slot (78) open toward its outer edge, the width of the slot being slightly larger than the thickness of a link of the pulling chain (72).

## Revendications

1. Dispositif d'insertion d'un tube (12) dans un trou de forage dans le sol, en particulier en vue de remplacer une conduite d'alimentation (10), pouvant être crevée, qui est enfouie dans le sol, ledit dispositif comportant au moins une tête de déplacement (16) à peu près conique, qui est reliée à son extrémité arrière de plus grand diamètre à un arbre tubulaire cylindrique (18), dont le diamètre extérieur correspond au grand diamètre de la tête de déplacement (16) et dont le diamètre intérieur est supérieur au diamètre extérieur du tube (12) à insérer, des moyens étant prévus pour relier le tube (12) à insérer à l'arbre (18), **caractérisé en ce qu'**à l'extrémité de l'arbre (18) qui est distante de la tête de déplacement (16) sont fixées aux moins deux attaches (52) dirigées parallèlement à l'axe et distantes angulairement les unes des autres, de sorte que la surface radialement extérieure (54) de l'attache (52) correspondante affleure au niveau de la surface d'enveloppe extérieure de l'arbre (18), et **en ce que** les attaches (52) comportent chacune un alésage radial destiné à recevoir un boulon de raccordement sans tête (60) de façon à ce que le boulon de raccordement (60), lorsqu'il est mis en place, ne fasse pas saillie au-delà de la surface radialement extérieure (54) de l'attache (52).

2. Dispositif selon la revendication 1, **caractérisé en ce que** le boulon de raccordement (60) est immobilisé par un élément de fixation de boulon (62) dirigé transversalement à l'axe (64) du boulon après la mise en place dans l'alésage de réception de boulon (58).

3. Dispositif selon la revendication 2, **caractérisé en ce qu'**il est ménagé, dans chaque attache (52), un deuxième alésage (66), coupant l'alésage de réception de boulon (58), en vue d'introduire un élément de fixation de boulon (62), et **en ce que** le boulon de raccordement (60) comporte sur sa surface périphérique extérieure un évidement (68) qui s'aligne avec le deuxième alésage (66) une fois le boulon de raccordement (60) introduit dans l'alésage de réception de boulon (58).

4. Dispositif selon la revendication 3, **caractérisé en ce que** l'évidement est une gorge annulaire périphérique (68).

5. Dispositif selon l'une des revendications 2 à 4, **caractérisé en ce que** l'élément de fixation de boulon est une goupille fendue (62).

6. Dispositif selon l'une des revendications 1 à 5, **caractérisé en ce que** la tête de déplacement (16) est conformée pour être creuse, avec une surface d'appui conique (50) destinée à la tête (48) d'un dispositif formant bélier (46) actionné par des moyens de pression.

7. Dispositif selon l'uhe des revendications 1 à 6, **caractérisé en ce que** la tête de déplacement (16) comporte une ouverture axiale (20) à son extrémité avant de plus petit diamètre.

8. Dispositif selon la revendication 7, **caractérisé en ce que** dans la tête de déplacement (16) est ménagé un troisième alésage (28) dirigé transversalement à l'ouverture axiale (20), et destiné à recevoir un boulon de fixation (24) au moyen duquel un adaptateur de calage fendu (22), inséré dans l'ouverture axiale (20), peut être fixé à la tête de déplacement (16).

9. Dispositif selon l'une des revendications 1 à 8, **caractérisé par** des moyens disposés dans la tête de déplacement (16) ou dans l'arbre (18) en vue de fixer une chaîne de traction (72), et par une plaque de serrage (76), dont le diamètre est supérieur au diamètre du tube (12) à insérer et qui comporte une fente (78), débouchant vers le bord de la plaque, dont la largeur est légèrement supérieure à l'épaisseur d'un maillon de la chaîne de traction (72).
